(19) Europäisches Patentamt / European Patent Office / Office européen des brevets

(11) **EP 4 017 742 B1**

(12) **EUROPÄISCHE PATENTSCHRIFT**

(45) Veröffentlichungstag und Bekanntmachung des Hinweises auf die Patenterteilung:
**04.10.2023   Patentblatt 2023/40**

(21) Anmeldenummer: **20706444.5**

(22) Anmeldetag: **19.02.2020**

(51) Internationale Patentklassifikation (IPC):
**B60H 1/00** *(2006.01)*        **B60H 1/32** *(2006.01)*

(52) Gemeinsame Patentklassifikation (CPC):
**B60H 1/3211; B60H 1/00807; B60H 1/32281;**
B60H 2001/325; B60H 2001/3251;
B60H 2001/3252; B60H 2001/3257;
B60H 2001/326; B60H 2001/3263; B60H 2001/3285

(86) Internationale Anmeldenummer:
**PCT/EP2020/054310**

(87) Internationale Veröffentlichungsnummer:
**WO 2021/032324 (25.02.2021 Gazette 2021/08)**

(54) **VERFAHREN ZUM BETREIBEN EINES KÄLTEMITTELKREISLAUFS EINER KÄLTEANLAGE EINES FAHRZEUGS**

METHOD FOR OPERATING A COOLANT CIRCUIT OF A REFRIGERATION SYSTEM OF A VEHICLE

PROCÉDÉ POUR FAIRE FONCTIONNER UN CIRCUIT FRIGORIFIQUE D'UNE INSTALLATION FRIGORIFIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2019   DE 102019212503**

(43) Veröffentlichungstag der Anmeldung:
**29.06.2022   Patentblatt 2022/26**

(73) Patentinhaber: **AUDI AG**
**85045 Ingolstadt (DE)**

(72) Erfinder:
• **SCHROEDER, Dirk**
  **85077 Manching (DE)**
• **REBINGER, Christian**
  **80807 München (DE)**
• **ROTTENKOLBER, Helmut**
  **93349 Mindelstetten (DE)**

(56) Entgegenhaltungen:
**EP-A1- 2 119 912        DE-A1-102015 007 564**
**DE-B3-102018 201 165**

**Beschreibung**

Die Erfindung betrifft ein Verfahren zum Betreiben eines Kältemittelkreislaufs einer Kälteanlage eines Fahrzeugs.

Der Einsatz von Kältemittelkreisläufen in Fahrzeugklimaanlagen ist bekannt, wobei manche Varianten eine 2-Verdampferanlage bzw. Mehr-Verdampferanlage vorsehen, nämlich einen Frontverdampfer und einen Heckanlagenverdampfer. Je nach Verschaltung und aktivem Betrieb der jeweiligen Wärmeübertragung variiert der Bedarf an benötigtem aktivem Kältemittel im Kältemittelkreislauf.

Elektrifizierte Fahrzeuge benötigen neben dem Frontverdampfer als mindestens einen Innenraum-Verdampfer eine separate Kühlvorrichtung zur Konditionierung und Temperierung des in der Regel als Hochvoltbatterie realisierten Energiespeichers. Eine solche Kühlvorrichtung kann mittels des Kältemittelkreislaufs realisiert werden und wird als aktive Batteriekühlung bezeichnet. Eine solche Kühlvorrichtung wird als Kältemittel-Kühlmittel-Wärmeübertrager realisiert, der als Verdampfer (durch Kühlen eines Luftstromes) bzw. als Chiller (durch Kühlen eines Kühlmittelstroms) arbeitet.

Ferner ist es bekannt, Kältemittelkreisläufe von Fahrzeugkälteanlagen mit elektrischen Expansionsorganen und elektrischen Absperrorganen auszustatten, die mit Steuergeräten kommunizieren. So wird ein elektrisches Expansionsorgan mittels eines Steuergerätes auf einen bestimmten Öffnungsquerschnitt verfahren, um bestimmte Zielgrößen einzustellen und zu erreichen. Ein elektrisches Absperrorgan dient der Einstellung der Strömungsrichtung des Kältemittels im Kältemittelkreislauf, wodurch eine bestimmte Systemverschaltung des Kältemittelkreislaufes realisiert wird.

Um für jedes Expansionsorgan und jedes Absperrorgan in einem Kältemittelkreislauf, insbesondere jedoch zu deren Steuerung oder Regelung die erforderlichen Informationen bereitstellen zu können, ist eine bestimmte Anzahl von Druck- und/ oder Temperatursensoren erforderlich, deren Anzahl von der Anzahl der Verdampfer und der mit dem Kältemittelkreislauf realisierten Funktionen, wie bspw. einer Wärmepumpenfunktion neben einem Kälteanlagenbetrieb abhängt. So ist es bspw. erforderlich, dass bei einem Kältemittelkreislauf mit mehreren Verdampfern, für den Fall, dass jedem Verdampfer ein elektrisches Expansionsorgan vorgeschaltet ist, hierfür niederdruckseitig mehrere Druck- und Temperatursensoren eingesetzt werden müssen. Solche kombinierten Druck- und Temperatursensoren sind teure Bauteile und müssen, zumindest die Erfassung des Drucksignals betreffend, in die Klimaleitungen oder die eingesetzten und zu bilanzierenden Wärmeübertrager des Kältemittelkreislaufs eingebunden werden und Kontakt zum Kältemittel haben.

Aus der DE 10 2018 201 165 B3 ist ein Verfahren zum Betreiben einer einen Kältemittelkreislauf aufweisenden Kälteanlage eines Fahrzeugs bekannt. Dieser Kältemittelkreislauf umfasst einen Chiller mit einem vorgeschalteten ersten Expansionsorgan und einem nachgeschalteten ersten Druck-Temperatur-sensor, einem Innenraum-Verdampfer mit einem vorgeschalteten zweiten Expansionsorgan und einem nachgeschalteten zweiten Druck-Temperatur-sensor, einem niederdruckseitigen Akkumulator, einem Kältemittelverdichter und einem Kondensator/Gaskühler sowie einer Regelvorrichtung zum Regeln des ersten und zweiten Expansionsorgans in Abhängigkeit der Messwerte der Druck-Temperatursensoren. Ferner wird vorgeschlagen, die Sensorik dieses Kältemittelkreislaufes derart zu vereinfachen, dass die Druck-Temperatur-sensoren nach den jeweiligen Verdampfern und Kondensatoren/Gaskühler sowie Heizkondenstoren/Heizgaskühler durch Temperatursensoren ersetzt werden. Die Druckwerte an der jeweiligen Position eines Temperatursensors werden über die Drucksensoren am Austritt des Kältemittelverdichters oder am Austritt des Akkumulators über Kennlinien bzw. Kennfelder abgeleitet und zurückgerechnet. In die Abschätzung der Drucksignalwerte am Austritt der jeweiligen Wärmeübertrager fließen in Abhängigkeit der Luftfeuchtigkeit, Luftmenge, Luftklappenstellung, Umgebungstemperatur, luftseitige Austrittstemperatur die zu erwartenden Druckverluste mit ein, so dass unter Einbeziehung dieser Werte in die niederdruck- und hochdruckseitigen Messwerte die Drucklage am jeweiligen Wärmeübertrager ermittelbar ist. Anhand der am Wärmeübertrager umgesetzten Leistung kann der zirkulierende Kältemittelmassenstrom abgeschätzt und darüber der Druckverlust prognostiziert werden.

Auch die DE 10 2015 007 564 A1 beschreibt eine Kälteanlage mit einem Kältemittelkreislauf, welcher einen Verdichter, einen Kondensator/Gaskühler, einen inneren Wärmetauscher, mindestens ein Expansionsorgan, mindestens einen Verdampfer sowie einen Niederdruck-Akkumulator mit einem demselben nachgeschalteten Druck-Temperatursensor aufweist. Auch dem Verdichter ist ein Druck-Temperatursensor nachgeschaltet. Um eine Unterkühlungsregelung nach dem inneren Wärmetauscher stabiler zu gestalten, kann dem inneren Wärmetauscher ein Drucksensor und ein Temperatursensor nachgeschaltet werden. In diesem Fall wäre der Temperatursensor ausreichend, da für den Druckwert an der Position des Temperatursensors derjenige Druckwert verwendbar ist, welcher mittels des am Austritt des Verdichters angeordneten Drucksensors messbar ist, da davon ausgegangen wird, dass die Druckverluste vernachlässigbar sind.

Aus der EP 2 119 912 A1 ist ein Kältemittelkreislauf mit einem Verdichter mit variabler Verdrängung, einem Kondensator, einer Expansionseinrichtung und einem Verdampfer bekannt. Der Verdichter weist ein Verdrängungssteuerungsventil auf, welches in Abhängigkeit zwischen einem Hoch- und Niederdruck des Kältemittelkreislaufs eine Ventilöffnung steuert. Zur Erfassung des Hochdrucks ist ein Drucksensor zwischen dem Austritt des Verdichters und dem Eingang des Kondensators angeordnet, während das Verdrängungssteuerungsventil dem Verdampfer nachgeordnet ist. Für die Drucksteuerung des Verdrängungssteuerungsventils wird der um einen Korrekturfaktor korrigierte Druckwert des Drucksensors verwendet.

Ein Kältemittelkreislauf einer Kälteanlage für ein Fahrzeug weist gemäß der DE 10 2018 122 675 A1 einen Kältemittelverdichter, einen als Kondensator! Gaskühler oder Wärmepumpenverdampfer betreibbaren äußeren Kältemittel-Luft-Wärmeübertrager, einen in einem Klimagerät angeordneten weiteren Kältemittel-Luft-Wärmeübertrager als Verdampfer, einen weiteren Kältemittel-Kühlmittel-Wärmeübertrager als Chiller sowie einen in dem Klimagerät angeordneten weiteren Kältemittel-Luft-Wärmeübertrager als Heizregister auf. Zur Regelung der Kälteanlage sind verschiedene Sensoren vorgesehen. So befinden sich Druck-Temperatur-Sensoren am Hochdruckausgang des Kältemittelverdichters, am Ausgang des äußeren Kältemittel-Luft-Wärmeübertragers sowie am Ausgang des Chillers. Temperatursensoren sind am Ausgang des Verdampfers sowie am Ausgang des Heizregisters angeordnet.

Auch die DE 10 2017 204 122 A1 beschreibt einen Kältemittelkreislauf einer Kälteanlage für ein Fahrzeug mit einem Kältemittelverdichter, einem Kondensator/ Gaskühler, einem inneren Wärmeübertrager, einem Verdampfer mit zugeordnetem Expansionsorgan sowie einem Niederdruck-Kältemittelsammler. Zur Steuerung der Kälteanlage ist ein dem Kältemittelverdichter nachgeordnete Druck-Temperatur-Sensor, ein dem Kondensator! Gaskühler nachgeordneter weiterer Druck-Temperatur-Sensor sowie ein zwischen dem Niederdruck-Kältemittelsammler und dem inneren Wärmeübertrager angeordneter weiterer Druck-Temperatur-Sensor in dem Kältemittelkreislauf vorgesehen.

Aus der DE 10 2015 104 464 A1 ist ein R744-Kältemittelkreislauf mit einem mechanisch angetriebenen Verdichter, einem Gaskühler, einem Akkumulator, einem inneren Wärmeübertrager, einem elektrisch regelbaren Expansionsorgan und einem Verdampfer sowie eine Regeleinrichtung mit Sensoren für Druck und Temperatur bekannt. Als Sensoren sind ein Temperatur- und Drucksensor zur Messung des Druckes und der Temperatur des Kältemittels nach dem Verdichter, ein Temperatursensor zur Messung der Temperatur des Kältemittels nach dem Gaskühler und ein Temperatursensor zur Messung der Temperatur der gekühlten Luft im Verdampfer vorgesehen.

Die Aufgabe der Erfindung besteht darin, ein verbessertes Verfahren zum Betreiben eines Kältemittelkreislauf einer Kälteanlage mit wenigstens zwei Systemabschnitten anzugeben, in welchen jeweils ein bestimmter Betriebsdruck einstellbar ist und nur eine minimale Anzahl von Druck und Temperatur des Kältemittels messenden Sensoren erforderlich ist.

Diese Aufgabe wird gelöst durch ein Verfahren mit den Merkmalen des Patentanspruches 1.

Bei diesem Verfahren zum Betreiben eines Kältemittelkreislaufs einer Kälteanlage eines Fahrzeugs im Kälteanlagenbetrieb mit

- wenigstens zwei Systemabschnitten, nämlich einem Niederdruck-Systemabschnitt und einem Hochdruck-Systemabschnitt, in welchen jeweils mittels einer Steuereinheit ein Systembetriebszustand hinsichtlich Druck und Temperatur des Kältemittels einstellbar ist,
- einem jeweils in jedem Systemabschnitt angeordneten Drucksensor, wobei die Sensorsignale der Drucksensoren der Steuereinheit zur Steuerung oder Regelung der Kälteanlage übermittelt werden, und
- in den Systemabschnitten angeordneten Wärmeübertragern als Komponenten des Kältemittelkreislaufs, wobei mittels eines Kältemittelverdichters als weitere Komponente des Kältemittelkreislaufs Kältemittel von dem Niederdruck-Systemabschnitt in den Hochdruck-Systemabschnitt gefördert wird, ist vorgesehen, dass
- zur Steuerung oder Regelung wenigstens einer Komponente mittels der Steuereinheit ein Temperatursensor zur Erfassung der Kältemitteltemperatur am Ausgang der Komponente derselben nachgeschaltet wird,
- das Sensorsignal des Temperatursensors der Steuereinheit übermittelt wird,
- ein Drucknäherungswert an der Position des Temperatursensors mittels eines mit einer Druckverlustberechnungsfunktion bestimmten Druckverlustwertes ausgehend von der Position des in dem Systemabschnitt der Komponente angeordneten Drucksensors bis zur Position des Temperatursensors berechnet wird, wenn der Temperatursensor und der Drucksensor an unterschiedlichen Positionen in dem Systemabschnitt angeordnet werden,
- die Druckverlustberechnungsfunktion bereitgestellt wird, indem aus den Betriebsdaten des Kältemittelverdichters der aktuell geförderte Kältemittelmassenstrom berechnet wird und mittels einer Massenstrom-Druckverlust-Kennlinie, welche in Abhängigkeit des aktuell geförderten Massenstroms sowie den Geometriedaten des maßgeblichen Leitungsabschnittes zwischen der Position des Drucksensors und der Position des Temperatursensors und der Komponente den Druckverlust zwischen der Position des Drucksensors und der Position des Temperatursensors angibt, ein entsprechender Druckverlustwert bestimmt, und
- die Kälteanlage zumindest in Abhängigkeit des berechneten Drucknäherungswertes geregelt wird.

Erfindungsgemäß ist es ausreichend, innerhalb eines jeden Systemabschnittes des Kältemittelkreislaufes, in welchem jeweils ein eigenständiges Betriebsdruckniveau eingestellt oder eingeregelt wird, maximal nur einen einzigen Drucksensor anzuordnen. Umfasst der Kältemittelkreislauf zumindest einen Niederdruck-Systemabschnitt und einen Hochdruck-Systemabschnitt, ist dort jeweils nur ein Drucksensor erforderlich, welcher an beliebiger Stelle des jeweiligen Systemabschnittes angeordnet werden kann. Umfasst ein solcher Kältemittelkreislauf auch eine Wärmepumpenfunktion, wird ein weiterer Systemabschnitt, nämlich ein Mitteldruck-Systemabschnitt eingerichtet, welchem ebenso ein Drucksensor zugeordnet und an beliebiger Stelle dieses Mitteldruck-Systemabschnittes positionierbar ist.

An jeder mittels der Steuereinheit zu steuernden Komponente, d. h. also an jeder zu bilanzierenden Komponente, wird stromabwärts derselben ein Temperatursensor angeordnet.

Die Sensorsignale dieser Drucksensoren und Temperatursensoren werden als Istwerte der Steuereinheit zugeführt, welches in Abhängigkeit von Sollwerten entsprechende Steuersignale zur Steuerung oder Regelung der Komponenten erzeugt. Das/die Steuersignal(e) wird/werden bspw. dem Kältemittelverdichter und/oder den den Zustand des Kältemittels in den Wärmeübertragern steuernden Expansionsorganen zugeführt.

Da der Druckverlust von den geometrische Randbedingungen, wie Leitungslänge, Leitungsverlauf und Leitungsquerschnitt des maßgeblichen Leitungsabschnittes einerseits und andererseits von der Menge des von dem Kältemittelverdichter geförderten Kältemittels abhängt, muss zunächst der Wert des geförderten Kältemittels bestimmt werden. Des Weiteren ist für jeden Leitungsabschnitt bzw. für jede Komponente, die für die Berechnung des Druckverlustes zwischen der Position des Drucksensors und derjenigen Position des Temperatursensors im Kältemittelkreislauf, für die der Drucknäherungswert berechnet werden soll, ein entsprechendes Kennlinienfeld bereitzustellen, welches experimentell, bspw. mittels eines Prüfstandes oder durch Simulation, erzeugt wird.

Eine vorteilhafte Weiterbildung der Erfindung sieht vor, dass

- im Hochdruck-Systemabschnitt ein äußerer direkter oder indirekter Kältemittel-Luft-Wärmeübertrager angeordnet ist,
- der für den Hochdruck-Systemabschnitt vorgesehene Drucksensor am Hochdruckausgang des Kältemittelverdichters oder dem Kältemittel-Luft-Wärmeübertrager nachgeordnet ist, und
- jeweils ein Temperatursensor dem Kältemittelverdichter und dem äußeren direkten oder indirekten Kältemittel-Luft-Wärmeübertrager nachgeordnet ist.

Bei dieser erfindungsgemäßen Weiterbildung wird ausgehend von dem Drucksensor im Hochdruck-Systemabschnitt mittels der Druckverlustberechnungsfunktion der Druckverlust über den äußeren direkten oder indirekten Kältemittel-Luft-Wärmeübertrager ermittelt und hieraus zusammen mit dem mittels des Drucksensors ermittelten Druckmesswert der Istdruck als Drucknäherungswert, jeweils in Abhängigkeit der Position des Drucksensors, nämlich an der jeweils zu bilanzierenden Position innerhalb des Hochdruck-Systemabschnitts berechnet bzw. abgeschätzt. Dieser Hochdrucknäherungswert dient zusammen mit anderen Parametern der Steuerung oder Regelung des Kälteanlagen-Betriebs der Kälteanlage.

Bei einem direkten Kältemittel-Luft-Wärmeübertrager besteht ein direkter Kontakt des Wärmeübertragers mit der Luft, bspw. der Innenraumluft oder der Umgebungsluft des Fahrzeugs. Bei einem indirekten Kältemittel-Luft-Wärmeübertrager wird der Kontakt zur Luft indirekt mittels eines weiteren Wärmeübertragers hergestellt, welcher bspw. über einen Kühlmittelkreislauf mit dem indirekten Kältemittel-Luft-Wärmeübertrager thermisch gekoppelt ist. Besteht eine thermische Kopplung zur Umgebungsluft des Fahrzeugs, handelt es sich um einen äußeren Wärmeübertrager, während es sich bei einer thermischen Kopplung zur Innenraumluft des Fahrzeug um einen inneren Wärmeübertrager handelt.

Eine weitere bevorzugte Weiterbildung der Erfindung sieht vor, dass

- im Niederdruck-Systemabschnitt ein Chiller und ein Verdampfer als Komponenten angeordnet sind,
- im Niederdruck-Systemabschnitt ein Niederdruck-Akkumulator angeordnet ist,
- der für den Niederdruck-Systemabschnitt vorgesehene Drucksensor entweder dem Niederdruck-Akkumulator oder dem Chiller nachgeordnet ist, und
- jeweils ein Temperatursensor dem Chiller und dem Niederdruck-Akkumulator nachgeordnet ist.

Bei dieser erfindungsgemäßen Ausgestaltung wird ausgehend von dem in dem Niederdruck-Systemabschnitt angeordneten Drucksensor mittels der Druckverlustberechnungsfunktion der Druckverlust bis zu einem Temperatur-sensor stromabwärts des Verdampfers und des Chillers ermittelt und hieraus zusammen mit dem mittels des Drucksensors ermittelten Druckmesswert der Istdruck als Drucknäherungswert berechnet. Dieser Drucknäherungswert dient zusammen mit anderen Parametern der Steuerung oder Regelung des Kälteanlagen-Betriebs der Kälteanlage.

Eine andere bevorzugte Weiterbildung der Erfindung sieht vor, dass

- im Niederdruck-Systemabschnitt ein Innenraum-Verdampfer und ein Chiller als Komponenten angeordnet sind,
- im Hochdruck-Systemabschnitt ein Hochdruck-Akkumulator angeordnet ist,
- der für den Niederdruck-Systemabschnitt vorgesehene Drucksensor entweder am Niederdruckeingang des Kältemittelverdichters, am Ausgang des Chillers oder am Ausgang des Innenraum-Verdampfers angeordnet ist, und
- jeweils ein Temperatursensor am Ausgang des Chillers, am Ausgang des Innenraum-Verdampfers und am Niederdruckeingang des Kältemittelverdichters angeordnet ist.

Auch bei dieser alternativen erfindungsgemäßen Ausgestaltung, bei welcher anstelle des Niederdruck-Akkumulators ein Hochdruck-Akkumulator bzw. Receiver oder Modulator als Kältemittelspeicher vorgesehen ist, wird ausgehend von dem in dem Niederdruck-Systemabschnitt angeordneten Drucksensor mittels der Druckverlustberechnungsfunktion der Druckverlust bis zu einem Temperatursensor stromabwärts des Verdampfers und des Chillers ermittelt und hieraus zusammen mit dem mittels des Drucksensors ermittelten Druckmesswert der Istdruck als Drucknäherungswert berechnet. Dieser Drucknäherungswert dient zusammen mit anderen Parametern der Steuerung oder Regelung des Kälteanlagen-Betriebs der Kälteanlage.

Eine letzte bevorzugte Ausführungsform der Erfindung sieht vor, dass einheitlich kalibrierte Temperatursensoren und einheitlich kalibrierte Drucksensoren eingesetzt werden. Somit können die Temperatur- und Drucksensoren als Einheitssensoren mit einer Einheitskalibrierung eingesetzt werden und damit an allen Positionen im Kältemittelkreislauf die gleiche Kennlinienabstimmung gewählt werden.

Das erfindungsgemäße Verfahren kann natürlich auch bei Kälteanlagen mit einer Wärmepumpenfunktionalität realisiert werden.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:

Figur 1    eine Schaltungsanordnung eines Kältemittelkreislaufs zur Durchführung eines Ausführungsbeispiels des erfindungs-gemäßen Verfahrens unter Verwendung eines niederdruckseitig angeordneten Kältemittelsammlers, und

Figur 2    eine zur Schaltungsanordnung nach Figur 1 alternative Schaltungsanordnung zur Durchführung eines Ausführungsbeispiels des erfindungsgemäßen Verfahrens unter Verwendung eines hochdruckseitig angeordneten Kältemittelsammlers.

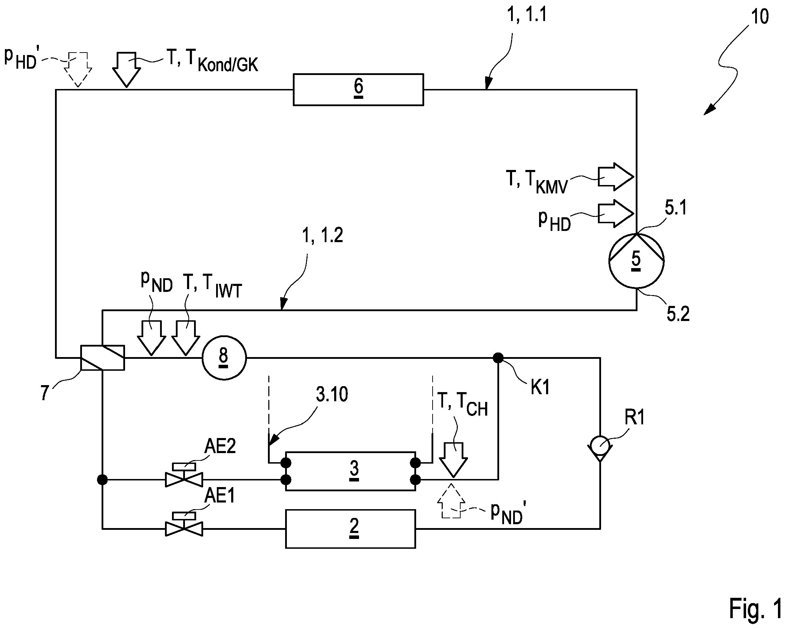

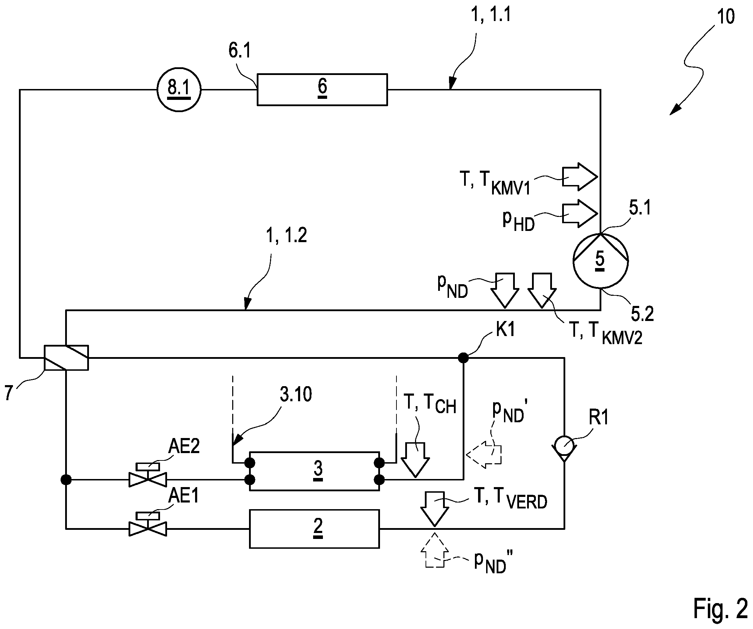

Die Figuren 1 und 2 zeigen der Einfachheit halber jeweils einen für den reinen AC-Betrieb (Kälteanlagenbetrieb) vorgesehenen Kältemittelkreislauf 1 einer Kälteanlage 10 eines Fahrzeugs. Auf die funktionale Erweiterung des Systems hinsichtlich eines Wärmepumpen- und/oder auch Mitteldruckbetriebs wird verzichtet, da das erfindungsgemäße Verfahren bereits mit dem einfachen Verschaltungskonzept vollumfänglich darstellbar ist und die erfindungsgemäßen Maßnahmen auf einen Kältemittelkreislauf mit Wärmepumpenfunktionalität und deren inaktiven Sektoren direkt übertragen werden kann.

Die Kältemittelkreisläufe gemäß den Figuren 1 und 2 sind in einer identischen Grundstruktur mit zwei Systemabschnitten, nämlich einem Hochdruck-Systemabschnitt 1.1 und einem Niederdruck-Systemabschnitt 1.2 aufgebaut und unterscheiden sich jeweils in der Anordnung eines Kältemittelsammlers als Niederdruck- oder Hochdruck-Kältemittelsammler 8 oder 8.1. Hierbei sei erwähnt, dass ein niederdruckseitig angeordneter Kältemittelsammler 8 sowohl für unterkritisch als auch für überkritisch arbeitende Kälteanlagen 10 Verwendung finden kann, während ein Hochdrucksammler 8.1 überwiegend bei rein unterkritisch arbeitenden Systemen zum Einsatz kommt. Der Hochdrucksammler 8.1. kann seinerseits auch in den Kondensators u.a. als sogenannter Modulator integriert sein.

Der Kältemittelkreislauf 1 gemäß den Figuren 1 und 2 besteht aus folgenden Komponenten:

- einem Kältemittelverdichter 5,
- einem äußeren Kondensator/Gaskühler 6 als direkter Kältemittel-Luft-Wärmeübertrager des Hochdruck-Systemabschnittes 1.1, welcher mit dem Hochdruckausgang des Kältemittelverdichters 5 fluidverbunden ist,
- einem Innenraum-Verdampfer 2 als direkter Kältemittel-Luft-Wärmeübertrager des Niederdruck-Systemabschnittes 1.2 und einem demselben vorgeschalteten und als Expansionsventil ausgebildeten Expansionsorgan AE1,
- einem Chiller 3 als direkter Kältemittel-Kühlmittel-Wärmeübertrager des Niederdruck-Systemabschnittes 1.2 zur Kühlung einer elektrischen Komponente (bspw. eine Hochvoltbatterie, eine elektrische Antriebskomponente usw.) des Fahrzeugs mit einem als elektrisches Expansionsventil ausgebildeten Expansionsorgan AE2, wobei der Chiller 3 mit einem Kühlmittelkreislauf 3.10 zur Kühlung der elektrischen Komponente thermisch gekoppelt und die Reihenschaltung aus Chiller 3 und zugeordnetem Expansionsorgan AE2 der Reihenschaltung aus Innenraum-Verdampferzweig und zugeordnetem Expansionsorgan AE1 parallel geschaltet ist,
- einem Kältemittelsammler, der gemäß Figur 1 als Niederdruck-Kälte-mittelsammler 8 dem Innenraum-Verdampfer 2 und dem Chiller 3 sowie gemäß Figur 2 als Hochdruck-Kältemittelsammler 8.1 dem äußeren Kondensator/Gaskühler 6 stromabwärts nachgeschaltet ist, und
- einem inneren Wärmeübertrager 7, dessen Hochdruckseite den Kondensator/Gaskühler 6 mit dem Expansionsorgan AE1 des Innenraum-Verdampfers 2 und mit dem Expansionsorgan AE2 des Chillers 3 fluidverbindet, während dessen niederdruckseitiger Abschnitt gemäß Figur 1 zwischen dem Niederdruck-Kältemittelsammler 8 und dem Kältemittelverdichter 5 in den Kältemittelkreislauf 1 und gemäß Figur 2 zwischen dem Chiller 3 bzw. dem Innenraum-Verdampfer 2 und dem Kältemittelverdichter 5 eingebunden ist.

Bei dem Kältemittelkreislauf 1 gemäß den Figuren 1 und 2 wird stromabwärts des Innenraum-Verdampfers 2 und des Chillers 3 das Kältemittel in einem Verbindungspunkt K1 zusammengeführt.

Schließlich ist für den Kältemittelkreislauf 1 gemäß den Figuren 1 und 2 ein Klimasteuergerät als Steuereinheit vorgesehen (in den Figuren nicht dargestellt), welchem zu verarbeitende Eingangssignale, wie bspw. Istwerte von Druck- und Temperatursensoren zugeführt werden, um hieraus Steuersignale bzw. Sollwerte als Ausgangssignale zur Steuerung der einzelnen Komponenten des Kältemittelkreislaufs 1 zu erzeugen. Im Detail bedeutet dies, dass mittels der Steuereinheit über den Kältemittelverdichter 5 und jeweils einem Expansionsorgan AE1 oder AE2 ein Systembetriebszustand, definiert durch Druck und der Temperatur des Kältemittels, eingestellt wird.

Dem Innenraum-Verdampfer 2 ist gemäß den Figuren 1 und 2 ein Rückschlagventil R1 nachgeordnet, welches bei inaktivem Innenraum-Verdampfer 2 eine Rückströmung von Kältemittel über den Verbindungspunkt K1 in den Innenraum-Verdampfer 2 verhindert. An dieser Position kann alternativ ein Absperrventil oder ein absperrbares Expansionsorgan angeordnet werden. Der Innenraum-Verdampfer 2 ist daher durch das demselben zugeordnete Expansionsorgan AE1 und durch das Rückschlagventil R1 begrenzt. Ist bei einem allgemeinen Systembetrieb, insbesondere jedoch im reinen Chiller-Betrieb, keine Rückströmung von Kältemittel in den Innenraum-Verdampfer 2 zu erwarten, kann auf das Rückschlagventil R1 verzichtet werden.

Der Niederdruck-Kältemittelsammler 8 des Kältemittelkreislaufs 1 nach Figur 1 hat die Aufgabe, die gasförmige und die flüssige Phase des eintretenden Kältemittels voneinander zu trennen und das flüssige Kältemittel im Sinne eines Volumenpuffers zu speichern oder in Umlauf zu bringen, je nach systemseitig benötigter Kältemittelmenge.

Der Hochdruck-Systemabschnitt 1.1 und der Niederdruck-Systemabschnitt 1.2 des Kältemittelkreislaufs 1 nach Figur 1 umfassen jeweils höchstens einen Drucksensor, nämlich der Hochdruck-Systemabschnitt 1.1 einen hochdruckseitigen Drucksensor und der Niederdruck-Systemabschnitt 1.2 einen niederdruckseitigen Drucksensor.

Der hochdruckseitige Drucksensor kann an verschiedenen Positionen des Hochdruckabschnittes 1.1 angeordnet werden. Vorzugsweise ist der hochdruckseitige Drucksensor als Drucksensor $p_{HD}$ direkt am Hochdruckausgang 5.1 des Kältemittelverdichters 5 angeordnet. Alternativ kann gemäß des Kältemittelkreislaufs 1 nach Figur 1 der Hochdrucksensor in dem Kältemittelkreislauf 1 als Drucksensor $p_{HD}$' dem Kondensator/Gaskühler 6 stromabwärts nachgeordnet werden.

Der niederdruckseitige Drucksensor kann gemäß Figur 1 an verschiedenen Positionen des Niederdruck-Systemabschnittes 1.2 angeordnet werden. Vorzugsweise ist dieser als Drucksensor $p_{ND}$ zwischen dem Niederdruck-Akkumulator 8 und dem Niederdruckabschnitt des inneren Wärmeübertragers 7 angeordnet. Alternativ ist dieser niederdruckseitiger Drucksensor zwischen dem Chiller 3 und dem Verbindungspunkt K1 als Drucksensor $p_{ND}$' positioniert.

Auch der Kältemittelkreislauf 1 mit dem Hochdruck-Kältemittelsammler 8.1 umfasst gemäß Figur 2 in dem Hochdruck-Systemabschnitt 1.1 und in dem Niederdruck-Systemabschnitt 1.2 jeweils einen einzigen Drucksensor, nämlich einen hochdruckseitigen Drucksensor als Drucksensor $p_{HD}$ in dem Hochdruck-Systemabschnitt 1.1 und einen niederdruckseitigen Drucksensor, welcher entweder als Drucksensor $p_{ND}$ zwischen dem niederdruckseitigen Abschnitt des inneren Wärmeübertragers 7 und dem Niederdruckeingang 5.2 des Kältemittelverdichters 5, als Drucksensor $p_{ND}$' zwischen dem Chiller 3 und dem Verbindungspunkt K1 oder als Drucksensor $p_{ND}$" zwischen dem Innenraum-Verdampfer 2 und dem Rückschlagventil R1 angeordnet ist, was jedoch nur dann sinnvoll ist, so lange das Rückschlagventil R1 nicht geschlossen ist und damit für das Gesamtsystem ein plausibles Drucksignal bereitgestellt wird.

Ist der Hochdruck-Kältemittelsammler 8.1 gemäß des Kältemittelkreislaufes 1 nach Figur 2 in den Kondensator/Gaskühler 6 integriert, so wäre auch ein Drucksensor stromabwärts des Kondensators/Gaskühlers 6 vorzusehen. Da es sich bei solchen Anlagen jedoch in der Regel um Systeme handelt, die ausschließlich für den unterkritischen Anlagenbetrieb vorgesehen sind, kann ein Drucksensor an dieser Position entfallen und statt dessen bevorzugt austrittsseitig des Kältemittelverdichters 5 vorgesehen werden.

Allgemein gilt hinsichtlich der Positionierung von Drucksensoren, dass in einem druckausbildenden Systemabschnitt höchstens ein Drucksensor vorzusehen ist, der seinerseits theoretisch an einer beliebigen Stelle zwischen dem erstmaligen und dem letztmaligen Auftreten der jeweiligen Drucklage positioniert werden kann, d.h. auf der Niederdruckseite zwischen dem Austritt des/der Expansionsorgane AE1, AE2 und dem Eintritt des Kältemittelverdichters 5 sowie auf der Hochdruckseite zwischen dem Austritt des Kältemittelverdichters 5 und dem Eintritt in das/die Expansionsorgane AE1, AE2.

Um den Kältemittelkreislauf 1 gemäß den Figuren 1 und 2 optimal zu betreiben, müssen in allen Betriebspunkten Messwerte von Druck und Temperatur an verschiedenen Positionen im Kältemittelkreislauf 1 vorliegen, die einer Steuereinheit (in den Figuren 1 und 2 nicht dargestellt), bspw. einem Klimasteuergerät zur Auswertung zugeführt werden, um hieraus Steuersignale u.a. für die elektrischen Expansionsorgane AE1 und AE2 und den Kältemittelverdichter 5 zu generieren. Mit den Steuersignalen werden die elektrischen Expansionsorgane auf einen bestimmten Öffnungsquerschnitt eingestellt, um die geforderten Größen für optimalen Hochdruck, Unterkühlung oder auch Überhitzung zu erzielen.

Temperatursensoren T sind in dem Kältemittelkreislauf 1 mit dem Niederdruck-Kältemittelsammler 8 gemäß Figur 1 am Ausgang des Chillers 3 als Temperatursensor $T_{CH}$, am Hochdruckausgang 5.1 des Kältemittelverdichters 5 als Temperatursensor $T_{KMV}$ und am Ausgang des Kondensators/Gaskühlers 6 als Temperatursensor $T_{Kond/GK}$ angeordnet.

Weiterhin kann mindestens ein weiterer Temperatursensor T (in Figur 1 nicht dargestellt) eintrittsseitig des Kältemittelverdichters 5 vorgesehen werden, jedoch ist dies dann insbesondere für Wärmepumpenanwendungen von Bedeutung. Insbesondere kann im Bedarfsfall dem Innenraum-Verdampfer 2 ein Temperatursensor T (in Figur 1 nicht dargestellt) nachgeschaltet werden.

Die Temperatursensoren T können als Einheitssensor oder als speziell auf einen bestimmten Temperaturbereich abgestimmten Sensor ausgeführt werden. Dabei erfolgt eine Kalibrierung auf einen bestimmten Messbereich mit genauster Werteerfassung bzw. höchste Messgenauigkeit, während außerhalb des definierten Messbereich Abweichungen von Soll-Werten zu Ist-Werten in der Regel größer werden. Ist das vernachlässigbar, so kann eine Einheitskalibrierung verwendet werden und an allen Positionen im Kältemittelkreislauf die gleiche Kennlinienabstimmung gewählt werden.

Ein Niederdruck- und Hochdrucksensor unterscheidet sich in der Regel durch deren Messbereich oder den Bereichen höchster Messgenauigkeit. Bei ausreichender Messgenauigkeit kann ein Einheitssensor, unabhängig von dem jeweiligen Druckniveau, für die Messung des Druckes eingesetzt werden.

In dem Kältemittelkreislauf 1 mit dem Hochdruck-Kältemittelsammler 8.1 gemäß Figur 2 sind ebenso Temperatursensoren T angeordnet, nämlich am Ausgang des Chillers 3 als Temperatursensor $T_{CH}$, am Ausgang des Innenraum-Verdampfers 2 als Temperatursensor $T_{VERD}$, als Temperatursensor $T_{KMV1}$ am Hochdruckausgang 5.1 sowie als Temperatursensor $T_{KMV2}$ am Niederdruckeingang 5.2 des Kältemittelverdichters 5.

Da jedoch in den Kältemittelkreisläufen 1 gemäß den Figuren 1 und 2 sowohl in dem Hochdruck-Systemabschnitt 1.1 als auch in dem Niederdruck-Systemabschnitt 1.2 jeweils nur ein Drucksensor vorhanden ist, müssen Druckwerte, im folgenden Drucknäherungswerte genannt, für diejenigen Positionen, die sich von den Positionen dieser Drucksensoren unterscheiden und an denen sich ein Temperatursensor befindet, berechnet werden. Ein für eine Position bestimmter Drucknäherungswert bildet zusammen mit dem zugehörigen Temperaturwert die Grundlage zur Bilanzierung der dieser Position zugeordneten Komponente.

Unter einer Bilanzierung einer Komponente ist der Vorgang zu verstehen, wonach für den optimalen Betrieb des Kältemittelkreislaufes 1 bestimmte Hochdrucklagen, Unterkühlungen und/oder Überhitzungen des Kältemittels insbesondere am Austritt von Wärmeübertragern wie Kondensator/Gaskühler 6, Innenraum-Verdampfer 2 und Chiller 3 einzustellen sind und dabei berechnungsbasierend anhand der Messgrößen mit den Istwerten ein Sollwertvergleich stattfindet und mit dem Verfahren der Expansionsorgane AE1, AE2 - veranlasst über das Steuergerät - die entsprechende Nachjustierung innerhalb des Systems erfolgt. Die Messwerte der Sensoren werden dabei in direkten Bezug zu den Stoffdaten des Kältemittels gebracht und damit die Istgrößen bestimmt. Auf dieser Basis erfolgt die Zielvorgabe für die neuen Sollgrößen. So wird bspw. eine Bilanzierung an dem Kältemittelverdichter 5 als Komponente des Kältemittelkreislaufes 1 durchgeführt, indem über den Drucksensor $p_{HD}$ der anliegende Systemhochdruck erfasst und über den Temperatursensor $T_{KMV}$ die Austrittstemperatur überwacht wird; beide Größen werden mit den zulässigen Maximalgrößen verglichen und ggf. erfolgt eine reduzierte Ansteuerung des Verdichters 5.

Eine Bilanzierung an dem Innenraum-Verdampfer 2 als Komponenten des Kältemittelkreislaufs 1 oder an dem Chiller 3 als Komponente des Kältemittelkreislauf 1 wird durchgeführt, indem kältemittelseitig die anliegenden Druck- und Temperaturwerte erfasst werden und über eine stoffdatenbasierende Berechnung bspw. eine Ist-Überhitzung des Kältemittels am Austritt des jeweiligen Wärmeübertragers bestimmt wird. Dieser Wert wird einem Sollwert gegenübergestellt und entsprechend durch Einwirken auf das dem jeweiligen Wärmeübertrager vorangeschalteten Expansionsorgan im Bedarfsfall korrigiert.

Schließlich wird eine Bilanzierung an dem Kondensator/Gaskühler 6 als Komponente des Kältemittelkreislauf durchgeführt, indem auf Basis der gemessenen Werte aus Druck und Temperatur eine vorliegende, stoffdatenbasierend bestimmte Unterkühlung bei unterkritischem Anlagenbetrieb oder ein vorliegender Hochdruck bestimmt wird, einem Sollwert gegenübergestellt und durch Einwirken der Steuereinheit auf die entsprechenden Aktoren nachjustiert wird. Ist in dem Kältemittelkreislauf 1 gemäß Figur 1 der einzige hochdruckseitige Drucksensor als Drucksensor $p_{HD}$ am Hochdruckausgang 5.1 des Kältemittelverdichters 5 angeordnet, wird ein Drucknäherungswert $p_{HD\_Kond/GK}$ an der Position des als $T_{Kond/GK}$ bezeichneten Temperatursensors T berechnet.

Zur Berechnung dieses Drucknäherungswertes $p_{HD\_Kond/GK}$ wird eine Druckverlustberechnungsfunktion bereitgestellt und als Algorithmus in der Steuereinheit der Kälteanlage 10 realisiert. Ausgehend von der Position des Drucksensors $p_{HD}$ wird der bis zur Position des Temperatursensors $T_{Kond/GK}$ auf der Basis des von dem Kältemittelverdichter 5 geförderten Kältemittelmassenstroms $m_{KM\_berechnet}$ der Druckverlust $\Delta p_{Kond/GK}$ mittels der Druckverlustberechnungsfunktion berechnet. Dieser Druckverlust $\Delta p_{Kond/GK}$ ergibt sich auch dann, wenn sich der hochdruckseitige Drucksensor als Drucksensor $p_{HD}'$ an der Position des Temperatursensors

$T_{Kond/GK}$ befindet. Dieser Druckverlust $\Delta p_{Kond/GK}$ stellt damit den Druckverlust über dem Wärmeübertrager 6 dar, unabhängig von der Position des Hochdrucksensors $p_{HD}$ bzw. $p_{HD}'$. Aus diesem Druckverlust $\Delta p_{Kond/GK}$ und dem Hochdruckmesswert $p_{ist\_HD}$ des Drucksensors $p_{HD}$ bzw. $p_{HD}'$ wird in Abhängigkeit der Position des Drucksensors der Drucknäherungswert $p_{HD\_Kon/GK}$ am Ausgang des Kondensators/Gaskühlers 6 oder der Drucknäherungswert $p_{HD\_KMV}$ am Hochdruckausgang 5.1 des Kältemittelverdichters 5 berechnet.

Es sei ergänzend erwähnt, dass durch eine hochdruckseitige Anordnung eines Drucksensors im Abschnitt stromabwärts des inneren Wärmeübertragers 7 zu den jeweiligen Expansionsorganen AE1 und AE2 durch bestimmbare Druckverlustanteilen über den inneren Wärmeübertrager 7 und den Kondensator/Gaskühler 6 die Drucklage nach dem Kältemittelverdichter 5 ebenso ermittelt und zurückberechnet werden kann.

Dieses Verfahren wird nachfolgend im Detail erläutert.

Zunächst wird der von dem Kältemittelverdichter 5 aktuell geförderte Kältemittelmassenstrom $m_{KM\_berechnet}$ aus dessen Betriebsdaten berechnet, indem über den Zusammenhang der Verdichterdrehzahl, des Druckverhältnisses und ggf. des Liefergrades eine annähernde Aussage über den umgesetzten Volumen- und dem daraus resultierenden Massenstrom getroffen werden kann. Die Werte können einem entsprechenden Kennfeld in Annäherung entnommen werden.

Im nächsten Schritt wird jeweils mittels einer Massenstrom-Druckverlust-Kennlinie oder jeder in der Art vergleichbaren Kennlinie, welche in Abhängigkeit des geförderten Massenstroms sowie den Geometriedaten des maßgeblichen Leitungsabschnittes zwischen der Position des Drucksensors $p_{HD}$ und der Position des Temperatursensors $T_{Kond/GK}$ (wie Leitungslänge, Leitungsquerschnitt, Krümmung usw.) und des Wärmeübertragers 6 den Druckverlust zwischen der Position des Drucksensors $p_{HD}$ oder $p_{HD}'$ und der Position des Temperatursensors $T_{Kond/GK}$ oder $T_{KMV}$ (und darüber hinaus für jeden weiteren im hochdruckseitigen Systemabschnitt positionierten Temperatursensor) angibt, ein entsprechender Druckverlust $\Delta p_{Kond/GK}$ bestimmt. Diese Massenstrom-Druckverlust-Kennlinien sind als Kennlinienfeld in der Steuereinheit der Kälteanlage 10 abgelegt und werden auf einem Prüfstand oder durch Simulation erzeugt. Entsprechend gibt es auch eine Massenstrom-Druckverlust-Kennlinie, wenn der Drucksensor als Drucksensor $p_{HD}'$ an der Position des Temperatursensors $T_{Kond/GK}$ angeordnet ist bzw. an jeder weiteren beliebigen Position des Hochdruckabschnitts 1.1, begrenzt durch den Hochdruckausgang 5.1 des Kältemittelverdichters 5 und des Eintritts in das mindestens eine Expansionsorgan AE1 oder AE2.

Aus dem Druckverlust $\Delta p_{Kond/GK}$ und dem Hochdruckmesswert $p_{ist\_HD}$ des Drucksensors $p_{HD}$ oder $p_{HD}'$ wird der Drucknäherungswert $p_{HD\_Kond/GK}$ bzw. $p_{HD\_KMV}$ berechnet. Falls der Hochdrucksensor als Drucksensor $p_{HD}$ am Hochdruckausgang 5.1 des Kältemittelverdichters 5 gemäß Figur 1 angeordnet ist, ergibt sich:

$$p_{HD\_Kond/GK} = p_{ist\_HD} - \Delta p_{Kond/GK}.$$

Der Druckverlust $\Delta p_{Kond/GK}$ beinhaltet dabei idealerweise sowohl die Leitungsals auch die Wärmeübertragereinflüsse, d.h. es werden alle zwischen den beiden zu bilanzierenden Positionen verbauten Komponenten in die Bilanzierung mit einbezogen.

Falls der Drucksensor als Drucksensor $p_{HD}'$ an der Position des Temperatursensors $T_{Kond/GK}$ angeordnet ist, ergibt sich:

$$p_{HD\_KMV} = p_{ist\_HD} + \Delta p_{Kond/GK}.$$

Für weitere alternative Positionen des hochdruckseitigen Drucksensors wird die analoge Vorgehensweise umgesetzt.

Ist in dem Kältemittelkreislauf 1 gemäß Figur 1 der einzige niederdruckseitigen Drucksensor als Drucksensor $p_{ND}$ zwischen dem Niederdruck-Kältemittelsammler 8 und dem niederdruckseitigen Abschnitt des inneren Wärmeübertragers 7 angeordnet, wird ein Drucknäherungswert $p_{ND\_CH}$ an der Position des Temperatursensors $T_{CH}$ berechnet. Ist dagegen der niederdruckseitiger Drucksensor als Drucksensor $p_{ND}'$ zwischen dem Chiller 3 und dem Verbindungspunkt K1 angeordnet, wird ein Drucknäherungswert $p_{ND\_IWT}$ an der Position des Temperatursensors $T_{IWT}$ berechnet.

Zur Berechnung dieser Drucknäherungswerte $p_{ND\_CH}$ und $p_{ND\_IWT}$ wird eine Druckverlustberechnungsfunktion bereitgestellt und als Algorithmus in der Steuereinheit der Klimaanlage 10 realisiert. Ausgehend von der Position des niederdruckseitig angeordneten Drucksensors $p_{ND}$ oder $p_{ND}'$ wird der bis zur Position jeweils des Temperatursensors $T_{CH}$ oder $T_{IWT}$ (und darüber hinaus für jeden weiteren im niederdruckseitigen Systemabschnitt positionierten Temperatursensor) auf der Basis des von dem Kältemittelverdichter 5 geförderten Kältemittelmassenstroms $m_{KM\_berechnet}$ auftretende Druckverlust $\Delta p$ mittels der Druckverlustberechnungsfunktion, u.a. abhängig von den geometrischen Verhältnissen (wie Leitungslänge, Leitungsquerschnitt, Krümmungen usw.) derjenigen Leitungsabschnitte berechnet, die den niederdruckseitigen Drucksensor mit der Position des entsprechenden Temperatursensors verbindet. Aus diesem Druckverlust $\Delta p$ und dem Niederdruckmesswert $p_{ist\_ND}$ des Drucksensors $p_{ND}$ oder $p_{ND}'$ wird der Drucknäherungswert $p_{ND\_CH}$ oder $p_{ND\_IWT}$ berechnet.

Dieses Verfahren wird nachfolgend im Detail erläutert.

Zunächst wird der von dem Kältemittelverdichter 5 aktuell geförderte Kältemittelmassenstrom

$m_{KM\_berechnet}$ aus dessen Betriebsdaten berechnet, wie dies oben bereits erläutert ist.

Im nächsten Schritt wird jeweils mittels einer Massenstrom-Druckverlust-Kennlinie oder jeder in der Art vergleichbaren Kennlinie, welche in Abhängigkeit des geförderten Massenstroms den Druckverlust zwischen der Position des Drucksensors $p_{ND}$ oder $p_{ND}$' und der Position des Temperatursensors $T_{CH}$ oder $T_{IWT}$ angibt, der entsprechende Druckverlust $\Delta p_{CH}$ bestimmt. Diese Massenstrom-Druckverlust-Kennlinien sind als Kennlinienfeld in der Steuereinheit der Kälteanlage 10 abgelegt und werden auf einem Prüfstand oder durch Simulation in Abhängigkeit der geometrischen Verhältnisse des Leitungsabschnittes zwischen dem niederdruckseitigen Drucksensor und der Position des entsprechenden Temperatursensors erzeugt.

Aus der Summe des Druckverlustes und dem Niederdruckmesswert $p_{ist\_ND}$ des Drucksensors $p_{ND}$ oder $p_{ND}$' wird der Drucknäherungswert berechnet:

$$p_{ND\_CH} = p_{ist\_ND} + \Delta p_{CH},$$

Für die Berechnung des Drucknäherungswertes $p_{ND\_CH}$ am Chiller 3 ist natürlich der in den entsprechenden Leitungsabschnitten auftretende Druckverlust aufgrund der Querschnitte, Krümmungen, Einschnürung usw. zu berücksichtigen. Damit ergibt sich eine Druckverlustberechnungskette für den Drucksensor $p_{ND}$, die aus den Komponenten Niederdruck-Akkumulator 8 und den Leitungsabschnitten besteht.

Ist als niederdruckseitiger Drucksensor nur der zwischen dem Chiller 3 und dem Verbindungspunkt K1 platzierte Drucksensor $p_{ND}$' vorgesehen, besteht eine solche Druckverlustberechnungskette zur Bestimmung des Drucknäherungswertes $p_{ND\_IWT}$ an der Position des Temperatursensors $T_{IWT}$ ebenso nur aus den Komponenten Niederdruck-Akkumulator 8 und den entsprechenden Leitungsabschnitten.

Für jede Komponente, die in der Druckverlustberechnungskette zwischen der Position des Drucksensors $p_{ND}$ oder $p_{ND}$' und derjenigen Stelle, für die der Drucknäherungswert berechnet werden soll, einbezogen werden muss, ist ein Druckverlust prüfstandsmäßig oder simulativ in Abhängigkeit des aktuell geförderten Kältemittelmassenstroms sowie der geometrischen Verhältnisse des entsprechenden Leitungsabschnittes zu ermitteln, um hieraus für eine solche Druckverlustberechnungskette die entsprechende Massenstrom-Druckverlust-Kennlinie erzeugen zu können.

Aus der Summe des jeweiligen Druckverlustes und dem Niederdruckmesswert $p_{ist\_ND}$ wird der jeweilige Drucknäherungswert berechnet:

$$p_{ND\_CH} = p_{ist\_ND} + \Delta p_{CH},$$

bei einem Drucksensor $p_{ND}$

$$p_{ND\_IWT} = p_{ist\_ND} - \Delta p_{CH},$$

bei einem Drucksensor $p_{ND}$'.

Die Werte des Druckverlustes sind dabei in Abhängigkeit der Lage des niederdruckseitigen Drucksensors relativ zur Position des entsprechenden Temperatursensors mit positivem oder negativem Vorzeichen "+" bzw. "-" zu versehen.

Für weitere alternative Positionen des niederdruckseitigen Drucksensors wird die analoge Vorgehensweise umgesetzt.

Im Folgenden wird die Bestimmung von Drucknäherungswerten für den Kältemittelkreislauf gemäß Figur 2 beschrieben.

In dem Hochdruck-Systemabschnitt 1.1 des Kältemittelkreislaufes 1 ist als einziger hochdruckseitige Drucksensor der Drucksensor $p_{HD}$ am Hochdruckausgang 5.1 des Kältemittelverdichters 5, also zwischen demselben und dem Wärmeübertrager 6 angeordnet. Für diese Position des Drucksensors $p_{HD}$ wird ein Drucknäherungswert $p_{HD\_Kond/GK}$ am Ausgang 6.1 des Wärmeübertragers 6 berechnet.

Zur Berechnung dieses Hochdrucknäherungswertes $p_{HD\_Kond/GK}$ wird eine Druckverlustberechnungsfunktion bereitgestellt und als Algorithmus in der Steuereinheit der Kälteanlage 10 realisiert. Ausgehend von der Position des Drucksensors $p_{HD}$ wird der bis zum Ausgang 6.1 des Wärmeübertragers 6 auf der Basis des von dem Kältemittelverdichter 5 geförderten Kältemittelmassenstroms $m_{KM\_berechnet}$ der Druckverlust $\Delta p_{Kond/GK}$ mittels der Druckverlustberechnungsfunktion berechnet. Aus diesem Druckverlust $\Delta p_{Kond/GK}$ und dem Hochdruckmesswert $p_{ist\_HD}$ des Drucksensors $p_{HD}$ wird der Hochdrucknäherungswert $p_{HD\_Kond/GK}$ berechnet.

Dieses Verfahren wird nachfolgend im Detail erläutert.

Zunächst wird der von dem Kältemittelverdichter 5 aktuell geförderte Kältemittelmassenstrom $m_{KM\_berechnet}$ aus dessen Betriebsdaten berechnet, wie oben bereits erläutert ist.

Im nächsten Schritt wird jeweils mittels einer Massenstrom-Druckverlust-Kennlinie, welche in Abhängigkeit des geförderten Massenstroms sowie der Geometriedaten (Leitungslänge, Leitungsquerschnitt, Krümmungen usw.) der entsprechenden Leitungsabschnitte des Kältemittelkreislaufes 1 zwischen der Position des Drucksensors $p_{HD}$ und dem Ausgang 6.1 des Wärmeübertragers 6 und der darüber hinaus aktiv durchströmten Komponenten den Druckverlust zwischen der Position des Drucksensors $p_{HD}$ und dem Ausgang 6.1 des Wärmeübertragers 6 den Druckverlust angibt, der entsprechende Druckverlust $\Delta p_{Kond/GK}$ bestimmt. Diese Massenstrom-Druckverlust-Kennlinien sind als Kennlinienfeld in der Steuereinheit der Kälteanlage 10 abgelegt und werden auf einem Prüfstand oder durch Simulation erzeugt.

Aus dem Druckverlust $\Delta p_{Kond/GK}$ und dem Hochdruckmesswert $p_{ist\_HD}$ wird der Drucknäherungswert $p_{HD\_Kond/GK}$ gemäß folgender Formel berechnet:

$$p_{HD\_Kond/GK} = p_{ist\_HD} - \Delta p_{Kond/GK}.$$

Für weitere alternative Positionen des hochdruckseitigen Drucksensors wird die analoge Vorgehensweise umgesetzt und bis auf die zu bilanzierende Position zurückgerechnet.

In dem Niederdruck-Systemabschnitt 1.2 des Kältemittelkreislaufs 1 gemäß Figur 2 ist der einzige niederdruckseitige Drucksensor entweder als Drucksensor $p_{ND}$ zwischen dem niederdruckseitigen Abschnitt des inneren Wärmeübertragers 7 und dem Niederdruckeingang 5.2 des Kältemittelverdichters 5, als Drucksensor $p_{ND}'$ zwischen dem Chiller 3 und dem Verbindungspunkt K1 oder als Drucksensor $p_{ND}''$ zwischen dem Innenraum-Verdampfer 2 und dem Rückschlagventil R1 angeordnet.

Befindet sich der Drucksensor als Drucksensor $p_{ND}$ an der erstgenannten Position, werden für die Positionen der Temperatursensoren T stromabwärts des Chillers 3 und des Innenraum-Verdampfers 2, also der Temperatursensoren $T_{CH}$ und $T_{VERD}$ jeweils ein Drucknäherungswert $p_{ND\_CH}$ und $p_{ND\_VERD}$ bestimmt.

Befindet sich der Drucksensor als Drucksensor $p_{ND}'$ an der zweitgenannten Position, werden für die Positionen der Temperatursensor T stromabwärts des Innenraum-Verdampfers 2 und eingangsseitig des Kältemittelverdichters 5, also der Temperatursensoren $T_{VERD}$ und $T_{KMV2}$ ein Drucknäherungswert $p_{ND\_VERD}$ und $p_{ND\_KMV}$ bestimmt.

Befindet sich der Drucksensor als Drucksensor $p_{ND}''$ an der drittgenannten Position, werden für die Position der Temperatursensoren T stromabwärts des Chillers 3 und eingangsseitig des Kältemittelverdichters 5, also der Temperatursensoren $T_{CH}$ und $T_{KMV2}$ ein Drucknäherungswert $p_{ND\_CH}$ und $p_{ND\_KMV}$ bestimmt. Jedoch ist in diesem Systemabschnitt die Anordnung des Drucksensors $p_{ND}''$ nur sinnvoll für den Fall des Verzichts auf das Rückschlagventil R1. Bei einem segmentierten Systemabschnitt Expansionsorgan AE1 zu Rückschlagventil R1 kann es zu unstimmigen zurückgemeldeten Drucklagen kommen, die auf die aktiven Systemabschnitte nicht übertragbar sind.

Zur Berechnung dieser Drucknäherungswerte $p_{ND\_CH}$, $p_{ND\_VERD}$ und $p_{ND\_KMV}$ wird eine Druckverlustberechnungsfunktion bereitgestellt und als Algorithmus in der Steuereinheit der Klimaanlage 10 realisiert. Ausgehend von der Position des niederdruckseitigen Drucksensors als Drucksensor $p_{ND}$, $p_{ND}'$ oder $p_{ND}''$ wird der bis zur Position jeweils der Temperatursensoren $T_{CH}$, $T_{VERD}$ und $T_{KMV2}$ auf der Basis des von dem Kältemittelverdichter 5 geförderten Kältemittelmassenstroms $m_{KM\_berechnet}$ der Druckverlust $\Delta p$ mittels der Druckverlustberechnungsfunktion berechnet. Aus diesem Druckverlust $\Delta p$ und dem Niederdruckmesswert $p_{ist\_ND}$ des Drucksensors $p_{ND}$, $p_{ND}'$ oder $p_{ND}''$ wird der Drucknäherungswert $p_{ND\_CH}$, $p_{ND\_VERD}$ und $p_{ND\_KMV}$ berechnet.

Dieses Verfahren wird nachfolgend im Detail erläutert.

Zunächst wird der von dem Kältemittelverdichter 5 aktuell geförderte Kältemittelmassenstrom $m_{KM\_berechnet}$ aus dessen Betriebsdaten berechnet, wie bereits oben erläutert ist.

Im nächsten Schritt wird jeweils mittels einer Massenstrom-Druckverlust-Kennlinie, welche in Abhängigkeit des geförderten Massenstroms sowie der Geometriedaten der Leitungsabschnitte zwischen dem Drucksensor $p_{ND}$, $p_{ND}'$ oder $p_{ND}''$ und der Position der jeweiligen Temperatursensoren $T_{CH}$, $T_{VERD}$ und $T_{KMV2}$ und der darüber hinaus aktiv durchströmten Komponenten den Druckverlust zwischen der Position des Drucksensors $p_{ND}$, $p_{ND}'$ oder $p_{ND}''$ und der jeweiligen Position der Temperatursensoren $T_{CH}$, $T_{VERD}$ und $T_{KMV2}$ angibt, der entsprechende Druckverlust $\Delta p_{CH}$, $\Delta p_{VERD}$, $\Delta p_{IVVT}$, $\Delta p_{VERD/R1}$ und $\Delta p_{IWT/R1}$ bestimmt. Diese Massenstrom-Druckverlust-Kennlinien sind als Kennlinienfeld in der Steuereinheit der Kälteanlage 10 abgelegt und werden auf einem Prüfstand oder durch Simulation erzeugt.

Aus der Summe des jeweiligen Druckverlustes und dem Niederdruckmesswert $p_{ist\_ND}$ des entsprechenden Drucksensors $p_{ND}$, $p_{ND}'$ oder $p_{ND}''$ wird der jeweilige Drucknäherungswert in Abhängigkeit der Position der Drucksensoren berechnet.

Für den Drucksensor $p_{ND}$ gilt:

$$p_{ND\_CH} = p_{ist\_ND} + \Delta p_{CH},$$

$$p_{ND\_VERD} = p_{ist\_ND} + \Delta p_{VERD}.$$

Für den Drucksensor $p_{ND}'$ gilt:

$$p_{ND\_VERD} = p_{ist\_ND'} + \Delta p_{VERD/R1},$$

$$p_{ND\_KMV} = p_{ist\_ND'} - \Delta p_{IWT}.$$

Für den Drucksensor $p_{ND}''$ gilt:

$$p_{ND\_CH} = p_{ist\_ND''} + \Delta p_{CH},$$

$$p_{ND\_KMV} = p_{ist\_ND''} - \Delta p_{IWT/R1}.$$

Für die Berechnung des Niederdrucknäherungswertes $\Delta p_{VERD}$ am Innenraum-Verdampfer 2 ist darüber hinaus der Druckverlust über das Rückschlagventil R1 mit zu berücksichtigen und bei der entsprechenden Anordnung des Drucksensors $p_{ND}''$ generell die Verwendung des Rückschlagventils R1 zu überprüfen.

Damit ergibt sich eine Druckverlustberechnungskette für den Niederdrucksensor $p_{ND}$, die bezüglich des Temperatursensors $T_{VERD}$ aus den Komponenten Niederdruckabschnitt des inneren Wärmeübertragers 7, den entsprechenden Leitungsabschnitten des Kältemittelkreislaufes 1 zwischen der Position des Drucksensors $p_{ND}$ und der Position des Temperatursensors $T_{VERD}$ und dem Rückschlagventil R1 und bezüglich des Temperatursensors $T_{CH}$ aus den Komponenten Niederdruckabschnitt des inneren Wärmeübertragers 7 und den entsprechenden Leitungsabschnitten besteht.

Für den Drucksensor $p_{ND}$' besteht hinsichtlich des Temperatursensors $T_{KMV2}$ eine Druckverlustberechnungskette aus dem Niederdruckabschnitt des inneren Wärmeübertragers 7 und bezüglich des Temperatursensors $T_{VERD}$ aus den entsprechenden Leitungsabschnitten und dem Rückschlagventil R1.

Für den Drucksensor $p_{ND}$" besteht hinsichtlich des Temperatursensors $T_{KMV2}$ eine Druckverlustberechnungskette aus dem Rückschlagventil R1, dem Niederdruckabschnitt des inneren Wärmeübertragers 7 und den entsprechenden Leitungsabschnitten und bezüglich des Temperatursensors $T_{CH}$ aus dem Rückschlagventil R1 und den entsprechenden Leitungsabschnitten.

Für jede Komponente, die in der Druckverlustberechnungskette zwischen der Position des Niederdrucksensors als Drucksensor $p_{ND}$, $p_{ND}$' oder $p_{ND}$" und derjenigen Stelle, für die der Drucknäherungswert berechnet werden soll, einbezogen werden muss, ist ein Druckverlust prüfstandsmäßig oder simulativ in Abhängigkeit des aktuell geförderten Kältemittelmassenstroms zu ermitteln, um hieraus für eine solche Druckverlustberechnungskette die entsprechende Massenstrom-Druckverlust-Kennlinie erzeugen zu können.

Die beschriebene Funktion ist ihrerseits unabhängig davon, ob die Komponenten "Wärmeübertrager" als direkt oder indirekt funktionierende Bauteile ausgeführt werden, d.h. unabhängig davon, ob Wärme bzw. Kälte vom Kälte-mittel mit oder ohne Zwischenmedium an den Zielort übertragen wird.

Kommt statt eines elektrischen Expansionsorgans, wie bspw. AE1 oder AE2, statt dessen ein thermisches Expansionsorgan TXV zum Einsatz, ist dem thermischen Expansionsorgan TXV stromabwärts folgenden Wärmeübertrager nicht zwangsläufig ein Temperatursensor nachzuschalten, da ein TXV nicht in seiner Wirkweise über die Steuereinheit aktiv beeinflusst werden kann.

Neben der hier beschriebenen Ausführungsform der getrennten Anordnung von Druck- und Temperatursensoren ist alternativ an Stellen, die direkt benachbart einen Druck- und Temperatursensor aufweisen, die Zusammenführung dieser beiden Signalaufnehmer in einen Kombinationssensor möglich.

Neben den beschriebenen Verfahren für die Ableitung von Drucksignalwerten in einem Nieder- und Hochdruckabschnitt, kann diese Vorgehensweise auch für Zwischen- oder Mitteldrucklagen zur Anwendung kommen und das sowohl bei Kälteanlagen- als auch bei Wärmepumpenanwendungen.

Die beschriebenen Verfahren können für alle bekannten Kältemittel, wie R744, R134a, R1234yf usw. eingesetzt werden, wobei speziell für R744-Systeme ausschließlich der Niederdruck-Kältemittelsammler 8 Berücksichtigung findet.

BEZUGSZEICHEN

| | |
|---|---|
| 1 | Kältemittelkreislauf |
| 1.1 | Hochdruckabschnitt des Kältemittelkreislaufs 1 |
| 1.2 | Niederdruckabschnitt des Kältemittelkreislaufes 1 |
| 2 | Verdampfer |
| 3 | Chiller |
| 3.10 | Kühlmittelkreislauf des Chillers 3 |
| 5 | Kältemittelverdichter |
| 5.1 | Hochdruckausgang des Kältemittelverdichters 5 |
| 5.2 | Niederdruckeingang des Kältemittelverdichters 5 |
| 6 | Wärmeübertrager |
| 7 | innerer Wärmeübertrager |
| 8 | Niederdruck-Akkumulator |
| 8.1 | Hochdruck-Akkumulator |
| 10 | Kälteanlage |
| AE1 | Expansionsorgan |
| AE2 | Expansionsorgan |
| K1 | Verbindungspunkt |
| $m_{KM\_berechnet}$ | Kältemittelmassenstrom |
| $p_{ist\_ND}$ | Niederdruckmesswert |
| $p_{ist\_HD}$ | Hochdruckmesswert |
| $p_{ND}$ | niederdruckseitiger Drucksensor |
| $p_{ND}$' | niederdruckseitiger Drucksensor |
| $p_{ND}$" | niederdruckseitiger Drucksensor |
| $p_{ND\_CH}$ | Drucknäherungswert |
| $p_{ND\_KMV}$ | Drucknäherungswert |
| $p_{ND\_IWT}$ | Drucknäherungswert |
| $p_{ND\_VERD}$ | Drucknäherungswert |
| $p_{HD}$' | hochdruckseitiger Drucksensor |
| $p_{HD}$' | hochdruckseitiger Drucksensor |
| $p_{HD\_Kond/GK}$ | Drucknäherungswert |
| $p_{HD\_KMV}$ | Drucknäherungswert |
| R1 | Rückschlagventil |
| $T_{CH}$ | Temperatursensor |

$T_{IWT}$ — Temperatursensor
$T_{Kond/GK}$ — Temperatursensor
$T_{KMV}$ — Temperatursensor
$T_{KMV1}$ — Temperatursensor
$T_{KMV2}$ — Temperatursensor
$T_{VERD}$ — Temperatursensor

$\Delta p$ — Druckverlustwert
$\Delta p_{CH}$ — Druckverlustwert
$\Delta p_{IWT}$ — Druckverlustwert
$\Delta p_{IWT/R1}$ — Druckverlustwert
$\Delta p_{VERD}$ — Druckverlustwert
$\Delta p_{VERD/R1}$ — Druckverlustwert
$\Delta p_{Kond/GK}$ — Druckverlustwert

## Patentansprüche

1. Verfahren zum Betreiben eines Kältemittelkreislaufs (1) einer Kälteanlage (10) eines Fahrzeugs mit

   - wenigstens zwei Systemabschnitten (1.1, 1.2), nämlich einem Niederdruck-Systemabschnitt (1.1) und einem Hochdruck-Systemabschnitt (1.2), in welchen jeweils mittels einer Steuereinheit ein Systembetriebszustand hinsichtlich Druck und Temperatur des Kältemittels einstellbar ist,
   - einem jeweils in jedem Systemabschnitt (1.1, 1.2) angeordneten Drucksensor ($p_{HD}$, $p_{HD}'$, $p_{ND}$, $p_{ND}'$, $p_{ND}''$), wobei die Sensorsignale der Drucksensoren ($p_{HD}$, $p_{HD}'$, $p_{ND}$, $p_{ND}'$, $p_{ND}''$) der Steuereinheit zur Steuerung oder Regelung der Kälteanlage übermittelt werden,
   - in den Systemabschnitten (1.1, 1.2) angeordneten Wärmeübertragern (2, 3, 6) als Komponenten des Kältemittelkreislaufs (1), wobei mittels eines Kältemittelverdichters (5) als weitere Komponente des Kältemittelkreislaufs (1) Kältemittel von dem Niederdruck-Systemabschnitt (1.1) in den Hochdruck-Systemabschnitt (1.2) gefördert wird, wobei
   - zur Steuerung oder Regelung wenigstens einer Komponente (2, 3, 5, 6) mittels der Steuereinheit ein Temperatursensor (T) zur Erfassung der Kältemitteltemperatur am Ausgang der Komponente derselben nachgeschaltet wird
   - das Sensorsignal des Temperatursensors (T) der Steuereinheit übermittelt wird,
   - ein Drucknäherungswert ($p_{HD\_Kond/GK}$, $p_{HD\_KMV}$) an der Position des Temperatursensors (T) mittels eines mit einer Druckverlustberechnungsfunktion bestimmten Druckverlustwertes ($\Delta p$, $\Delta p_{CH}$, $\Delta p_{IWT}$, $\Delta p_{IWT/R1}$, $\Delta p_{VERD}$, $\Delta p_{VERD/R1}$, $\Delta p_{Kond/GK}$) ausgehend von der Position des in dem Systemabschnitt (1.1, 1.2) der Komponente (2, 3, 5, 6) angeordneten Drucksensors ($p_{HD}$, $p_{HD}'$, $p_{ND}$, $p_{ND}'$, $p_{ND}''$) bis zur Position des Temperatursensors (T) berechnet wird, wenn der Temperatursensor (T) und der Drucksensor ($p_{HD}$, $p_{HD}'$, $p_{ND}$, $p_{ND}'$, $p_{ND}''$) an unterschiedlichen Positionen in dem Systemabschnitt (1.1, 1.2) angeordnet werden,
   - die Druckverlustberechnungsfunktion bereitgestellt wird, indem aus den Betriebsdaten des Kältemittelverdichters (5) der aktuell geförderte Kältemittelmassenstrom ($m_{KM\_berechnet}$) berechnet wird und mittels einer Massenstrom-Druckverlust-Kennlinie, welche in Abhängigkeit des aktuell geförderten Massenstroms ($m_{KM\_berechnet}$) sowie den Geometriedaten des maßgeblichen Leitungsabschnittes zwischen der Position des Drucksensors ($p_{HD}$, $p_{HD}'$, $p_{ND}$, $p_{ND}'$, $p_{ND}''$) und der Position des Temperatursensors (T) und der Komponente (2, 3, 5, 6) den Druckverlust zwischen der Position des Drucksensors ($p_{HD}$, $p_{HD}'$, $p_{ND}$, $p_{ND}'$, $p_{ND}''$) und der Position des Temperatursensors (T) angibt, ein entsprechender Druckverlustwert ($\Delta p$, $\Delta p_{CH}$, $\Delta p_{IWT}$, $\Delta p_{INT/R1}$, $\Delta p_{VERD}$, $\Delta p_{VERD/R1}$, $\Delta p_{Kond/GK}$) bestimmt, und
   - die Kälteanlage (10) zumindest in Abhängigkeit des berechneten Drucknäherungswertes ($p_{HD\_Kond/GK}$, $p_{HD\_KMV}$, $p_{ND\_CH}$, $p_{ND\_IWT}$) gesteuert oder geregelt wird.

2. Verfahren nach Anspruch 1, bei welchem

   - im Hochdruck-Systemabschnitt (1.1) ein äußerer direkter oder indirekter Kältemittel-Luft-Wärmeübertrager (6) angeordnet ist,
   - der für den Hochdruck-Systemabschnitt (1.1) vorgesehene Drucksensor ($p_{HD}$, $p_{HD}'$) am Hochdruckausgang (5.1) des Kältemittelverdichters (5) oder dem Kältemittel-Luft-Wärmeübertrager (6) nachgeordnet ist, und
   - jeweils ein Temperatursensor (T, $T_{Kond/GK}$, $T_{KMV}$, $T_{KMV1}$) dem Kältemittelverdichter (5) und dem äußeren direkten oder indirekten Kältemittel-Luft-Wärmeübertrager (6) nachgeordnet ist.

3. Verfahren nach Anspruch 1 oder 2, bei welchem

   - im Niederdruck-Systemabschnitt (1.2) ein Innenraum-Verdampfer (2) und ein Chiller (3) als Komponenten angeordnet sind,
   - im Niederdruck-Systemabschnitt (1.2) ein Niederdruck-Akkumulator (8) angeordnet ist,
   - der für den Niederdruck-Systemabschnitt (1.2) vorgesehene Drucksensor ($p_{ND}$, $p_{ND}'$) entweder dem Niederdruck-Akkumulator (8) oder dem Chiller (3) nachgeordnet ist, und
   - jeweils ein Temperatursensor (T, $T_{CH}$, $T_{IWT}$) dem Chiller (3) und dem Niederdruck-Akkumulator (8) nachgeordnet ist.

**4.** Verfahren nach Anspruch 1 oder 2, bei welchem

- im Niederdruck-Systemabschnitt (1.2) ein Innenraum-Verdampfer (2) und ein Chiller (3) als Komponenten angeordnet sind,
- im Hochdruck-Systemabschnitt (1.1) ein Hochdruck-Akkumulator (8.1) angeordnet ist,
- der für den Niederdruck-Systemabschnitt (1.2) vorgesehene Drucksensor ($p_{ND}$, $p_{ND}'$, $p_{ND}''$) entweder am Niederdruckeingang (5.2) des Kältemittelverdichters (5), am Ausgang des Chillers (3) oder am Ausgang des Innenraum-Verdampfers (2) angeordnet ist, und
- jeweils ein Temperatursensor (T, $T_{CH}$, $T_{VERD}$, $T_{KMV2}$) am Ausgang des Chillers (3), am Ausgang des Innenraum-Verdampfers (2) und am Niederdruckeingang (5.2) des Kältemittelverdichters (5) angeordnet ist.

**5.** Verfahren nach einem der vorhergehenden Ansprüche, bei welchem einheitlich kalibrierte Temperatursensoren (T) und einheitlich kalibrierte Drucksensoren ($p_{ND}$, $p_{ND}'$, $p_{ND}''$, $p_{HD}$, $p_{HD}'$) eingesetzt werden.

**Claims**

**1.** Method for operating a coolant circuit (1) of a refrigeration system of a vehicle (10), having

- at least two system sections (1.1, 1.2), in particular a low-pressure system section (1.1) and a high-pressure system section (1.2), in each of which a system operating state can be set, by means of a controller, with respect to the pressure and temperature of the coolant,
- a pressure sensor ($p_{HD}$, $p_{HD}'$, $p_{ND}$, $p_{ND}'$, $p_{ND}''$) arranged in each system section (1.1, 1.2), wherein the sensor signals of the pressure sensors ($p_{HD}$, $p_{HD}'$, $p_{ND}$, $p_{ND}'$, $p_{ND}''$) are transmitted to the controller in order to control or regulate the refrigeration system,
- heat exchangers (2, 3, 6) arranged in the system sections (1.1, 1.2) as components of the coolant circuit (1), wherein coolant is conveyed from the low-pressure system section (1.1) into the high-pressure system section (1.2) by a coolant compressor (5) as a further component of the coolant circuit (1), wherein
- in order to control or regulate at least one component (2, 3, 5, 6) by means of the controller, a temperature sensor (T) for detecting the coolant temperature at the outlet of the component is connected downstream thereof,
- the sensor signal of the temperature sensor (T) is transmitted to the controller,
- an approximate pressure value ($p_{HD\_Kond/GK}$, $p_{HD\_KMV}$) at the position of the temperature sensor is calculated using a pressure loss value ($\Delta p$, $\Delta p_{CH}$, $\Delta p_{IWT}$, $\Delta p_{IWT/R1}$, $\Delta p_{VERD}$, $\Delta p_{VERD/R1}$, $\Delta p_{Kond/GK}$) which is determined using a pressure loss calculation function, starting from the position of the pressure sensor ($p_{HD}$, $p_{HD}'$, $p_{ND}$, $p_{ND}'$, $p_{ND}''$) arranged in the system section (1.1, 1.2) of the components (2, 3, 5, 6) up to the position of the temperature sensor (T) if the temperature sensor (T) and the pressure sensor ($p_{HD}$, $p_{HD}'$, $p_{ND}$, $p_{ND}'$, $p_{ND}''$) are arranged at different positions in the system section (1.1, 1.2),
- the pressure loss calculation function is provided by calculating the currently conveyed coolant mass flow ($m_{KM\_berechnet}$) from the operating data of the coolant compressor (5) and, by means of a mass flow-pressure loss characteristic curve which is calculated as a function of the currently conveyed mass flow ($m_{KM\_berechnet}$) and the geometry data of the relevant line section between the position of the pressure sensor ($p_{HD}$, $p_{HD}'$, $p_{ND}$, $p_{ND}'$, $p_{ND}''$) and the position of the temperature sensor (T) and the component (2, 3, 5, 6), the pressure loss between the position of the pressure sensor ($p_{HD}$, $p_{HD}'$, $p_{ND}$, $p_{ND}'$, $p_{ND}''$) and the position of the temperature sensor (T), a corresponding pressure loss value ($\Delta p$, $\Delta p_{CH}$, $\Delta p_{IWT}$, $\Delta p_{IWT/R1}$, $\Delta p_{VERD}$, $\Delta p_{VERD/R1}$, $\Delta p_{Kond/GK}$) is determined, and
- the refrigeration system (10) is controlled or regulated at least as a function of the calculated approximate pressure value ($p_{HD\_Kond/GK}$, $p_{HD\_KMV}$, $p_{ND\_CH}$, $p_{ND\_IWT}$).

**2.** Method according to claim 1, in which

- an external direct or indirect coolant-air heat exchanger (6) is arranged in the high-pressure system section (1.1),
- the pressure sensor ($p_{HD}$, $p_{HD}'$) provided for the high-pressure system section (1.1) is arranged downstream of the high-pressure outlet (5.1) of the coolant compressor (5) or the coolant-air heat exchanger (6), and
- one temperature sensor (T, $T_{Kond/GK}$, $T_{KMV}$, $T_{KMV1}$) in each case is arranged downstream of the coolant compressor (5) and the external direct or indirect coolant-air heat exchanger (6).

**3.** Method according to claim 1 or 2, in which

- an interior evaporator (2) and a chiller (3) are arranged as components in the low-pressure system section (1.2),
- a low-pressure accumulator (8) is arranged in the low-pressure system section (1.2),
- the pressure sensor ($p_{ND}$, $p_{ND}'$) provided for the low-pressure system section (1.2) is arranged downstream of either the low-pressure accumulator (8) or the chiller (3), and
- one temperature sensor (T, $T_{CH}$, $T_{IWT}$) in each case is arranged downstream of the chiller (3) and the low-pressure accumulator (8).

4. Method according to claim 1 or 2, in which

- an interior evaporator (2) and a chiller (3) are arranged as components in the low-pressure system section (1.2),
- a high-pressure accumulator (8.1) is arranged in the high-pressure system section (1.1),
- the pressure sensor ($p_{ND}$, $p_{ND}'$, $p_{ND}''$) provided for the low-pressure system section (1.2) is arranged either at the low-pressure inlet (5.2) of the coolant compressor (5), at the outlet of the chiller (3) or at the outlet of the interior evaporator (2), and
- one temperature sensor (T, $T_{CH}$, $T_{VERD}$, $T_{KMV2}$) is arranged in each case at the outlet of the chiller (3), at the outlet of the interior evaporator (2) and at the low-pressure inlet (5.2) of the coolant compressor (5).

5. Method according to any one of the preceding claims, in which uniformly calibrated temperature sensors (T) and uniformly calibrated pressure sensors ($p_{ND}$, $p_{ND}'$, $p_{ND}''$, $p_{HD}$, $p_{HD}'$) are used.

**Revendications**

1. Procédé de fonctionnement d'un circuit frigorifique (1) d'une installation frigorifique (10) d'un véhicule avec

- au moins deux sections de système (1.1, 1.2), à savoir une section de système basse pression (1.1) et une section de système haute pression (1.2), dans lesquelles respectivement au moyen d'un dispositif de commande, un état de fonctionnement de système concernant la pression et la température du réfrigérant est réglable,
- un capteur de pression ($p_{HD}$, $p_{HD}'$, $p_{ND}$, $p_{ND}'$, $p_{ND}''$) agencé respectivement dans chaque section de système (1.1, 1.2), dans lequel les signaux de capteur des capteurs de pression ($p_{HD}$, $p_{HD}'$, $p_{ND}$, $p_{ND}'$, $p_{ND}''$) sont transmis au dispositif de commande pour la commande ou la régulation de l'installation frigorifique,
- des échangeurs de chaleur (2, 3, 6) agencés dans les sections de système (1.1, 1.2) comme composants du circuit frigorifique (1), dans lequel le réfrigérant est transporté de la section de système basse pression (1.1) dans la section de système haute pression (1.2) au moyen d'un compresseur frigorifique (5) comme autre composant du circuit frigorifique (1), dans lequel
- pour la commande ou la régulation au moins d'un composant (2, 3, 5, 6) au moyen d'un dispositif de commande, un capteur de température (T) est monté en aval pour la détection de la température frigorifique sur la sortie du composant de celui-ci
- le signal de capteur du capteur de température (T) est transmis au dispositif de commande,
- une valeur approchée de pression ($p_{HD\_Kond/GK}$, $p_{HD\_KMV}$) dans la position du capteur de température (T) est calculée au moyen d'une valeur de perte de pression ($\Delta p$, $\Delta p_{CH}$, $\Delta p_{IWT}$, $\Delta p_{IWT/R1}$, $\Delta p_{VERD}$, $\Delta p_{VERD/R1}$, $\Delta p_{Kond/GK}$) déterminée avec une fonction de calcul de perte de pression à partir de la position du capteur de pression ($p_{HD}$, $p_{HD}'$, $p_{ND}$, $p_{ND}'$, $p_{ND}''$) agencé dans la section de système (1.1, 1.2) du composant (2, 3, 5, 6) jusqu'à la position du capteur de température (T), lorsque le capteur de température (T) et le capteur de pression ($p_{HD}$, $p_{HD}'$, $p_{ND}$, $p_{ND}'$, $p_{ND}''$) sont agencés dans des positions différentes dans la section de système (1.1, 1.2),
- la fonction de calcul de perte de pression est fournie en calculant, à partir des données de fonctionnement du compresseur frigorifique (5), le courant de masse frigorifique ($m_{KM\_berechnet}$) actuellement transporté et au moyen d'une ligne caractéristique de perte de pression de courant de masse qui est calculée en fonction du courant de masse ($m_{KM\_berechnet}$) actuellement transporté ainsi que des données de géométrie de la section de guidage pertinente entre la position du capteur de pression ($p_{HD}$, $p_{HD}'$, $p_{ND}$, $p_{ND}'$, $p_{ND}''$) et la position du capteur de température (T) et du composant (2, 3, 5, 6), la perte de pression entre la position du capteur de pression ($p_{HD}$, $p_{HD}'$, $p_{ND}$, $p_{ND}'$, $p_{ND}''$) et la position du capteur de température (T), une valeur de perte de pression ($\Delta p$, $\Delta p_{CH}$, $\Delta p_{IWT}$, $\Delta p_{IWT/R1}$, $\Delta p_{VERD}$, $\Delta p_{VERD/R1}$, $\Delta p_{Kond/GK}$) correspondante est déterminée, et
- l'installation frigorifique (10) est commandée ou régulée au moins en fonction de la valeur approchée de pression ($p_{HD\_Kond/GK}$, $p_{HD\_KMV}$, $p_{ND\_CH}$, $p_{ND\_IWT}$) calculée.

2. Procédé selon la revendication 1, pour lequel

- un échangeur de chaleur air-réfrigérant (6) direct ou indirect extérieur est agencé dans la section de système haute pression (1.1),
- le capteur de pression ($p_{HD}$, $p_{HD}'$) prévu pour la section de système haute pression (1.1) est agencé en aval sur la sortie haute pression (5.1) du compresseur frigorifique (5) ou de l'échangeur de chaleur air-réfrigérant (6), et
- respectivement un capteur de température (T, $T_{Kond/GK}$, $T_{KMV}$, $T_{KMV1}$) est agencé en aval du compresseur frigorifique (5) et l'échangeur de chaleur air-réfrigérant (6) direct ou indirect extérieur.

3. Procédé selon la revendication 1 ou 2, pour lequel

   - un évaporateur d'espace intérieur (2) et un refroidisseur (3) sont agencés comme composants dans la section de système basse pression (1.2),
   - un accumulateur basse pression (8) est agencé dans la section de système basse pression (1.2),
   - le capteur de pression ($p_{ND}$, $p_{ND}'$) prévu pour la section de système basse pression (1.2) est agencé en aval de l'accumulateur basse pression (8) ou du refroidisseur (3), et
   - respectivement un capteur de température (T, $T_{CH}$, $T_{IWT}$) est agencé en aval du refroidisseur (3) et de l'accumulateur basse pression (8).

4. Procédé selon la revendication 1 ou 2, pour lequel

   - un évaporateur d'espace intérieur (2) et un refroidisseur (3) sont agencés comme composants dans la section de système basse pression (1.2),
   - un accumulateur haute pression (8.1) est agencé dans la section de système haute pression (1.1),
   - le capteur de pression ($p_{ND}$, $p_{ND}'$, $p_{ND}''$) prévu pour la section de système basse pression (1.2) est agencé sur l'entrée basse pression (5.2) du compresseur frigorifique (5), sur la sortie du refroidisseur (3) ou sur la sortie de l'évaporateur d'espace intérieur (2), et
   - respectivement un capteur de température (T, $T_{CH}$, $T_{VERD}$, $T_{KMV2}$) est agencé sur la sortie du refroidisseur (3), sur la sortie de l'évaporateur d'espace intérieur (2) et sur l'entrée basse pression (5.2) du compresseur frigorifique (5).

5. Procédé selon l'une quelconque des revendications précédentes, pour lequel des capteurs de température (T) étalonnés uniformément et des capteurs de pression étalonnés uniformément ($p_{ND}$, $p_{ND}'$, $p_{ND}''$, $p_{HD}$, $p_{HD}'$) sont utilisés.

Fig. 1

16

Fig. 2

EP 4 017 742 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018201165 B3
- DE 102015007564 A1
- EP 2119912 A1

- DE 102018122675 A1
- DE 102017204122 A1
- DE 102015104464 A1